# EUROPEAN PATENT SPECIFICATION

(11) **EP 4 100 373 B1**
(45) Date of publication and mention of the grant of the patent: **01.04.2026**
(21) Application number: 21710097.3
(22) Date of filing: 04.02.2021
(51) Int. Cl.: C03B 23/023, C03B 23/03, C03B 23/035

(54) **AUTOMOTIVE GLASS STRUCTURE HAVING FEATURE LINES AND RELATED METHOD OF MANUFACTURE**
KRAFTFAHRZEUGGLASSTRUKTUR MIT MERKMALLINIEN UND ZUGEHÖRIGES VERFAHREN ZUR HERSTELLUNG
STRUCTURE DE VERRE AUTOMOBILE PRÉSENTANT DES LIGNES CARACTÉRISTIQUES ET PROCÉDÉ DE FABRICATION ASSOCIÉ

(30) Priority: 06.02.2020 US 202062971103 P
(43) Date of publication of application: 14.12.2022
(60) Divisional application: 26151579.5
(73) Proprietor: Tesla, Inc., Austin, TX 78725 (US)
(72) Inventor: GOUGOUSSIS, Christos, Austin, Texas 78725 (US); SWENEY, William S., Austin, Texas 78725 (US); MOTTSMITH, Rosemary, Austin, Texas 78725 (US); PILLIOD, Michael, Austin, Texas 78725 (US); HAMEL, Gregoire, Austin, Texas 78725 (US)
(74) Representative: Liesegang, Eva
(86) International application number: PCT/US2021/016644
(87) International publication number: WO 2021/158808

(56) References cited:
- EP-A1- 2 457 881
- EP-B1- 2 457 881
- WO-A1-2019/130284
- CN-A- 108 494 902
- CN-A- 109 518 129
- JP-A- S61 122 132
- US-A1- 2004 172 975
- US-A1- 2020 346 524

## Description

### BACKGROUND

### TECHNICAL FIELD

The present disclosure relates to glass structures for use in automotive vehicles, and more particularly, to automotive glass structures having curved feature lines and processes for forming the same.

### DESCRIPTION OF RELATED ART

Passenger vehicles such as cars, trucks, or the like, typically include a curved front windshield to protect the driver and provide reduced wind resistance during use. Vehicles typically include various side and rear windows as well, including various shapes and curvatures. Processes for making such windows, and windshields in particular, typically begin with a flat sheet of glass that is cut to desired dimensions and then heated in an oven to sufficient temperatures to slightly bend or curve the glass to a desired shape. The glass may be supported on one or more sides by railings such that gravity pulls and curves the glass there between. Alternatively, the glass may be placed over a mold and heated in an oven to bend around the mold and take the shape thereof.

Generally, such processes for making glass structures are limited by the amount of curvature or bending achievable with the glass. For example, typically only smooth, high radius of curvatures (e.g., radius of curvature of 1-3 meters or more), are used for automotive glass structures.

WO 2019/130284 A1 discloses a vehicle glazing having a sharply curved portion and the method for bending such glazing. The sharply curved portion of the glass may extend along the surface of the glass. The sharply curved portion is obtained by locally heating by means of a laser source, heating the portion of the glass to a temperature sufficiently high enough to allow said portion of glass to bend.

EP 2 457 881 A1 discloses a method for bending a sheet of material into a shaped article. A reformable area and a non-reformable area of the sheet of material are heated to a first temperature range corresponding to a first viscosity range. The reformable area of the sheet of material is subsequently heated to a second temperature range corresponding to a second viscosity range. The reformable area of the sheet of material is reformed into a selected shape by at least one of sagging the reformable area of the sheet of material and applying a force to the sheet of material outside of or near a boundary of the reformable area.

JP S61122132 A discloses a pair of glass plates for producing a laminated bent glass, stacked together, and local heaters placed above and below the glass plates along the bending line of the bending part keeping a definite distances from the bending part.

### SUMMARY

The invention is defined in the claims. In some embodiments, a process for forming an automotive glass structure having one or more feature lines (or curves/bends) includes applying localized heat to one or more locations of the glass structure, whereby the glass structure bends at the location of the localized heat. In some examples, the glass structure is supported by a support tool such that as localized heat is applied gravity forces the glass structure to bend at the one or more locations (e.g., along a longitudinal line of the glass), thereby forming a feature line or bend in the glass. In some examples, additional forces may be applied to the glass structure, e.g., via a press, vacuum air suction, or the like to aid in bending or shaping of the glass structure. In some examples, a radius of curvature of the feature line or bend in the glass structure at the one or more locations is between 2 mm and 5 cm.

In another embodiment, a glass structure includes a first layer of glass having a feature line or bend in at least one location thereof. The feature line having a radius of curvature between 2 mm and 5 cm. In some examples, the glass structure is a multilayer glass structure and includes a second layer of glass including a first portion of glass and a second portion of glass, the first and second portions meeting at the feature line or bend in the first layer of glass. A polymer may be disposed between the first layer of glass and the second layer of glass.

Various other glass structures and processes are provided herein.

### BRIEF DESCRIPTION OF THE DRAWINGS

Figure 1 illustrates a conventional process for bending automotive glass structures.
Figure 2 illustrates a process for forming one or more features lines in a glass structure according to one embodiment.
Figures 3A and 3B illustrate a process for forming a glass structure according to another embodiment.
Figures 4A and 4B illustrate a process for forming a glass structure according to another embodiment.
Figures 5A and 5B illustrate an exemplary glass structure according to another embodiment not according to the invention.
Figures 6A-6B illustrate an example vehicle which includes one or more glass structures according to the techniques described herein.
Figure 7 illustrates an example of an interior of a vehicle

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION OF THE DISCLOSURE

This application describes example techniques for forming glass structures for use in a vehicle (e.g., a car, a truck, a semi-truck, and so on) or other apparatus. Example glass structures may include exterior glass for the vehicle. As an example, a glass structure may include a windshield (e.g., a front or rear windshield). As another example, a glass structure may include a window (e.g., a passenger or driver side window). Example glass structures may also include an interior glass for the vehicle. For example, interior glass for a dash (e.g., dashboard) in the front portion of the interior of the vehicle may be formed. As another example, interior glass used for gauges, displays (e.g., electronic displays), instrument clusters, inside panels for doors, consoles, and so on, may be formed and are part of the present embodiments.

As will be described, the techniques described herein may allow for forming glass structures with aggressive curves or folds (e.g., herein also referred to as 'feature lines'). For example, a faceted windshield with aggressive feature lines may be formed. Without being constrained by way of example, a glass structure may have a feature line with an example radius of curvature of between 2 mm and 5 cm. Thus, glass structures may be formed in shapes and configurations which were previously unavailable through conventional bending methods. In this way, the techniques described herein may provide for stronger glass structures with more aesthetic options not available with conventional automotive glass structure processes.

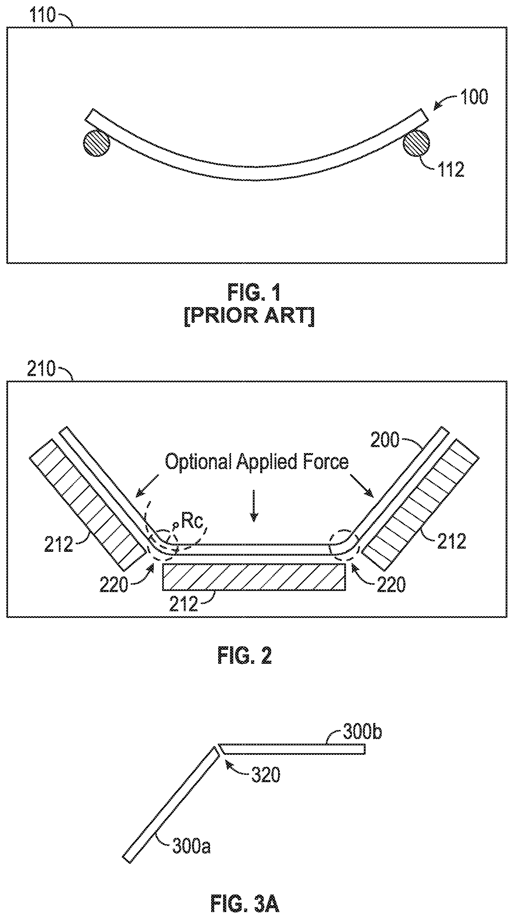

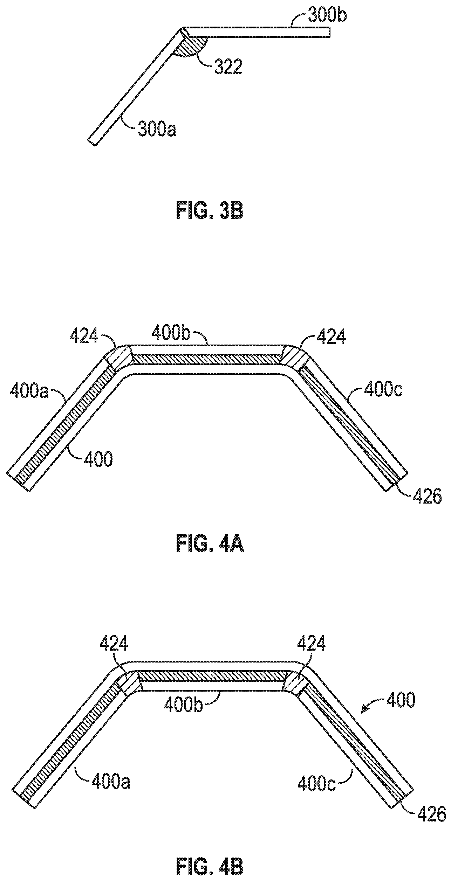

With respect to forming the glass structures, glass (e.g., borosilicate glass) may be locally heated to allow for aggressive feature lines where the bend in the glass may be between 5 and 120 degrees, or between 45 to 60 degrees, or for example, 30, 42, 55, 62, 68 degrees. An example of such local heating is described below with respect to Figure 2. Additionally, and as described at least in Figures 3A-3B, glass pieces or portions may be connected using, for example, adhesive. This adhesive may be similarly locally heated to allow for aggressive feature lines. The above-described glass may be single layer, for example as utilized in an interior of a vehicle. In some embodiments, the single layer glass (e.g., single ply glass) may between about .7mm to about 1.5mm in thickness. A film (e.g., a polymer) may be applied to the single layer. The glass may additionally be multi-layer glass, such as illustrated in Figures 4A-5B. For example, multi-layer glass may be used to form exterior glass structures as described herein.

Reference will now be made in detail to specific aspects or features, examples of which are illustrated in the accompanying drawings. Like reference numerals refer to corresponding parts throughout the figures.

Figure 1 illustrates a side view of a typical process for forming automotive glass structures, e.g., a windshield. In particular, a substantially planar sheet of glass 100 is heated in an oven 110, while supported by a ring tool 112 (e.g., a ring tool made of steel). As glass 100 reaches a sufficient temperature, glass 100 will bend or curve between while being supported by tool 112. By varying the time, heat, and the shape of tool 112, the amount of curvature or bend can be varied to a desired curvature, however, generally such radius of curvatures are limited to having a radius of curvature of about 1-3 meters. Such systems and processes are not well adapted for processing glass to have sharp bends or to have localized bends or curves in the glass structure.

Figure 2 illustrates a side view of glass bending process according to one embodiment described herein. In this example, a substantially planar sheet of glass 200 (e.g., cut and sized to approximate dimensions for use in a vehicle windshield) is heated in an oven 210 similar to that described above to a temperature of approximately 650 degrees Celsius or more, the temperature depending on the softening point of the glass used. Glass 200 may include various materials suitable for automotive use, for example, annealed soda lime glass, alumino-silicate, borosilicate, or the like. Further, glass 200 may include a single pane of glass or multiple panes of glass that are stacked together, the different panes being laminated together using a polymer film (e.g. polyvinyl butyral, thermoplastic urethane, polyethylene terephthalate, ionomer, polycarbonate or the like). Further, after bending, glass 200 may be paired with other piece(s) of glass, with PC or another polymer, and can be laminate with PVB, EVA, or the like. In one example suitable for automotive windshields, glass 200 can be approximately 1 by 2 meters and approximately 0.5 mm to 5 mm or more in thickness.

In this example, a tool 212, which may include a silica material (or other material with a higher melting temperature than glass), is used to selectively support the glass 200 and promote bending in localized regions, e.g., to create desired feature lines therein. In particular, tool 212 is generally formed in a shape desired for glass 200 after processing/bending. In some examples, portions of tool 212 may be movable, e.g., from a flat or planar orientation to the curved or trench shape shown. The articulated tool 212 can move as the glass softens to promote bending in selected areas. Furthermore, the tool 212 may include fewer or more areas to form additional feature lines, and may also include large radius of curvature surfaces (e.g., 1 m or more) similar to conventional molds.

In this example, localized heating 220 is applied to the glass 200, in particular, applied to locations longitudinally along glass 200 where sharp curves or feature lines are desired. Localized heat 220 can be provided via laser, heating resistors (e.g., tungsten wire, rod), flame, plasma, radiative (e.g., diode), or the like. In some examples, a CO₂ laser can be used and scanned along glass 200 where the bending is desired, here along 220. Such a laser bending step can be done before the glass enters inside the oven 210, which reduces or eliminates the local stress generated by the local heating inside the oven 210. In other examples, a heating resistor, e.g., a wire or rod, can be used and the glass 200 placed there over, where the glass 200 bends around the heating resistor via gravity pull and/or with the aid of a support tool, such as tool 212.

The localized heat 220 causes regions or locations of glass 200 to reach a higher temperature (e.g., 700 degrees Celsius or greater) than the surrounding glass 200. Thus, these regions or locations can bend or curve more easily than would occur based on the heat within oven 210 alone (e.g., 650 degrees Celsius). Heating the glass 200 in a localized manner, e.g., along a narrow region, allows for bending of the glass 200 in a sharp manner, e.g., with a small radius of curvature, to form feature lines. For example, the achievable radius of curvature at the location of the localized heat 220 for typical automotive glass (e.g., via a process as shown in Figure 2) having a thickness of 0.5-5.5 mm, is in the range of 2mm to 5cm.

In some examples, a downward force may also be applied to glass 200, for example, via air suction below the tool 212 to pull the glass 200 against the tool 212. In other examples, a press or mold may be brought down onto the glass 200 to press the glass 200 into the tool 212. In yet other examples, the tool 212 could be oriented downward, e.g., forming a convex instead of concave shape, and the glass 200 bent downward over the tool 212 to form sharp curves similar to that of Figure 2.

Figures 3A and 3B illustrate a process for forming a glass structure having a feature line according to another embodiment. In this example, two glass portions 300a and 300b are brought together at a desired angle at joint 320. Glass portions 300a and 300b can be the same or different type of glass and can be joined together in a miter joint at joint 320. Glass 300a and 300b may then joined at the joint 320 via an adhesive 322 as shown in Figure 3B. Adhesive 322 may include a thermally applied UV cured material such as silicon, polycarbonate transparent plastic, or other suitable adhesive material. In other examples, glass 300a and 300b may be glass welded together by localized heat applied when brought together, e.g., via laser, torch, resistive heating, or the like.

As shown in Figure 3B, glass 300a and 330b are adhered together with a small gap there between filled with adhesive 322, however, in other examples, glass 300a and 300b can be brought together in direct contact. For example, direct contact may be achieved using glass welding or with adhesive 322 on the planar surfaces thereof. In a similar manner, additional glass portions may be joined with glass 300a and/or 300b to form additional bends or feature lines (e.g., similar to the shape shown in Figure 2 or other shapes).

The final structure shown in Figure 3B may similarly have a small radius of curvature at the joint as described herein. Additionally, the final structure may have various interior angles formed between glass 300a and 300b (e.g., greater than 0 and less than 180 degrees). In some embodiments, glass 300a and 300b may form an angle between 5 degrees and 120 degrees.

Figures 4A and 4B illustrate a glass structure according to additional embodiments. In these embodiments, a first layer of glass 400 formed similarly to the embodiment of Figure 2 is combined with a second layer of glass 400a-400c formed similarly to the embodiment of Figure 3B.

In particular, Figure 4A illustrates a structure having the first glass layer 400 as having two feature lines or curved portions similar to glass 200 described above. Adjacent the first glass layer 400, a second layer of glass made of glass 400a, 400b, and 400c is disposed and offset by an interlayer 426. The interlayer 426, for example, may include a suitable polymer such as PVB, EVA, or other suitable material, e.g., that can be autoclaved. Glass 400a, 400b, and 400c can be joined together in various fashions as described with respect to Figures 3A and 3B (e.g., by adhesive 424), which may include various thermally applied or UV cured materials. Additionally, glass 400a, 400b, and 400c may also be heat welded together. As an example, the first layer of glass 400 formed as described in Figure 2 may have a radius of curvature of between 2 mm and 5 cm.

The example shown in Figure 4A may provide for a sharper feature line on the outside or exterior of the curved portion via a mitered join between glass 400a, 400b, and 400c, relative to the curved glass 400. Such a structure may provide for relatively sharp feature lines (e.g., relative to conventional process) for an automotive glass structure (e.g., a windshield, rear window, display, glass for a dash, and so on). Alternatively, as shown in Figure 4B, a sharper feature line on the inside of the curved portion can be achieved with glass 400a, 400b, and 400c disposed on the exterior. Furthermore, in some examples, two or more layers formed of glass portions may be used to create sharper feature lines on the interior and exterior of the final glass structure. Additionally, two or more layers formed of glass layers similar to Figure 2 may be used for softer feature lines on the interior and exterior of the final glass structure.

The second layer of glass 400a, 400b, 400c, may additionally be used to adjust a color or visual character associated with the glass structure. For example, each of the portions 400a-400c may vary in a visual spectrum which is apparent to a viewer. In this example, the portions may appear darker or lighter to a viewer.

The examples shown in Figure 4A and Figure 4B may have improved optical distortion over conventional glass bending processes. For example, optical distortion may be reduced or minimized to a very narrow band, with the achieved feature line being very sharp relative to conventionally bended glass structures. Additionally, functionality can be added into or with the adhesive 424 such as a light guide or embedding of structural elements.

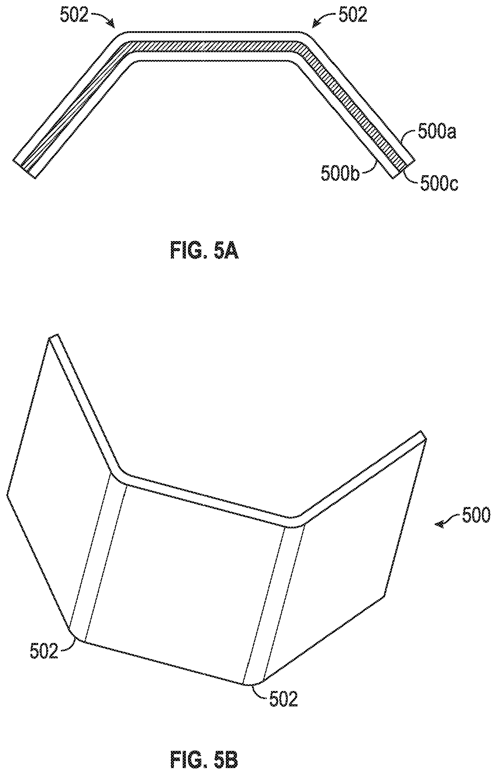

Figures 5A and 5B illustrate an exemplary finished glass structure having feature lines 502 according to one embodiment not according to the invention, which is similar to Figures 4A and 4B. In particular, Figure 5A illustrates a side view of glass structure 500, which may include various layers 500a, 500b, and 500c. The layers 500a-500c may include glass layers 500a-500b with a polymer layer 500c disposed there between. Other possible constructions include a layer of glass 500a with polymer layers 500b and 500c, or a layer of glass 500b with polymer layers 500a and 500c. Additional layers of glass and or polymers may be included.

In the illustrated embodiment not according to the invention, the glass layers 500a-500b may each optionally be formed according to the techniques described in Figure 2. For example, each of the glass layers 500a-500b may have two feature lines or curved portions similar to glass 200 described above. These glass layers 500a-500b may then be connected via layer 500c (e.g., an interlayer, such as layer 426 described above). Thus, each of the glass layers 500a-500b may have a radius of curvature of between 2 mm and 5 cm.

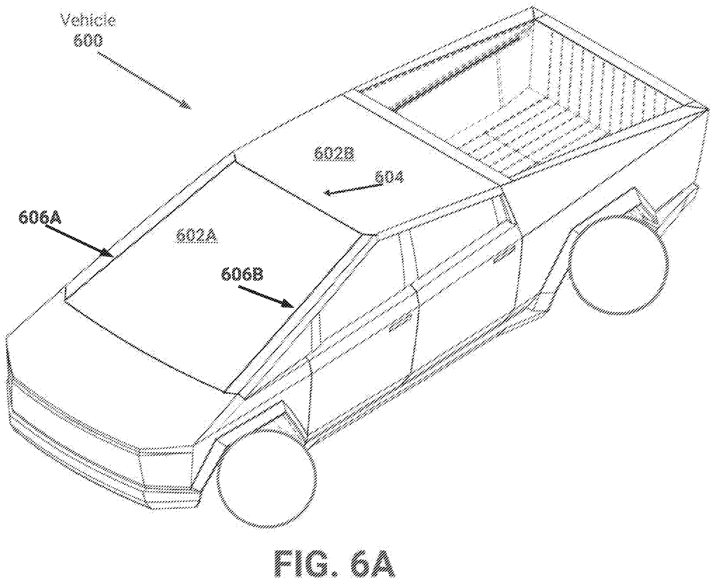

Figures 6A-6B illustrate an example vehicle 600 which includes a glass structure according to the techniques described herein. In Figure 6A, vehicle 600 (e.g., a truck) is depicted. In some embodiments, the vehicle 600 may be an electric vehicle. The vehicle 600 includes a first glass structure 602A and a second glass structure 602B.

The first glass structure 602A may be, for example, the glass structure illustrated in Figure 5B and described above. As an example, the first glass structure 602A may represent a windshield positioned on the vehicle and formed according to the techniques described herein. In some embodiments, the first glass structure 602A may be multi-layer. Optionally, the first glass structure 602A may be single layer and formed as described herein with respect to Figure 2. Thus, the first glass structure 602A may have feature lines (e.g., facets) 606A-606B. As an example, these feature lines 600A-600B may have radii of curvatures of between 2 mm and 5 cm. In some embodiments, the feature lines 600A-600B may represent an angle of between 45-60 degrees, or 50-75 degrees, and so on. While not illustrated, it may be appreciated that the vehicle 600 may include an interior glass structure. For example, the vehicle 600 may include a glass dash positioned in the front of the vehicle 600 which is formed as described herein. In this example, the glass may optionally be a single layer glass with a film (e.g., polymer film) on top. As another example, a display (e.g., a touch-sensitive electronic display) may be formed from glass as described herein. The display may advantageously be curved or extend across substantially a length of the vehicle 600 due to the enhanced forming techniques described herein.

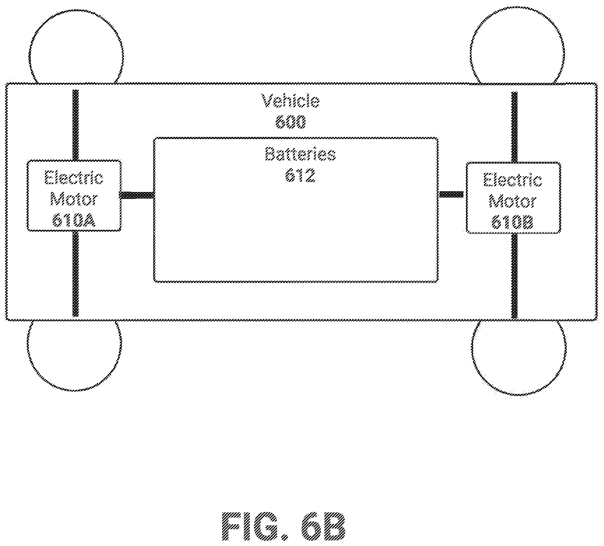

Figure 6B illustrates a block diagram of the vehicle 600. The vehicle 600 may include one or more electric motors 610A-610B which cause movement of the vehicle 600. The electric motors 610A-610B may include, for example, induction motors, permanent magnet motors, and so on. Batteries 612 (e.g., one or more battery packs each comprising a multitude of batteries) may be used to power the electric motors 610A-610B as is known by those skilled in the art.

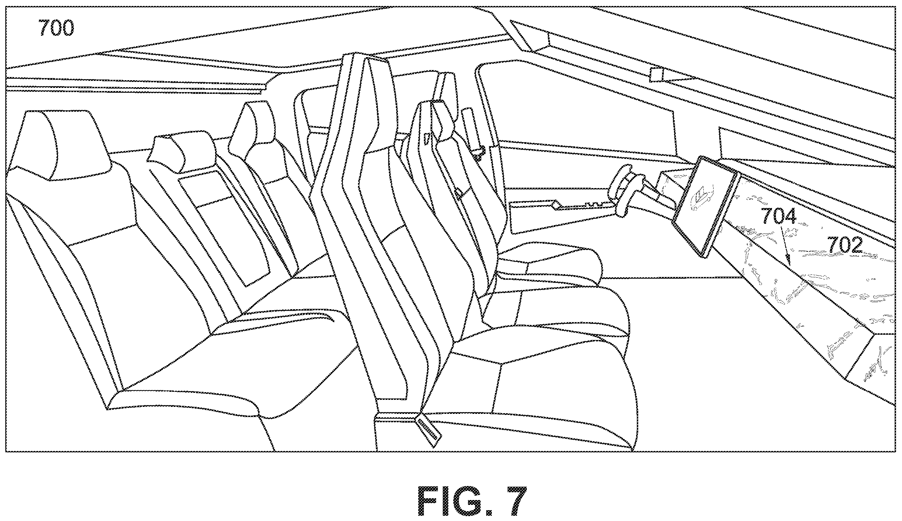

Figure 7 illustrates an example of an interior 700 of a vehicle, such as the vehicle 600 described above. The interior 700 includes a glass dash 702 with a feature line 704. As described above, the feature line 704 may have a radius of curvature of between 2mm and 5cm. In some embodiments, the feature line 704 may represent an angle of between 45-60 degrees, or 50-75 degrees, and so on.

The glass dash 702 may be formed according to the techniques described above. For example, the glass dash 702 may be formed as described in Figure 2. Thus, a single layer of glass may be used and locally heated to form the feature line 704. In some embodiments, a film or layer may be positioned below the glass dash 702. For example, the film or layer may be used to present a visual design and/or may be used to ensure the glass does not shatter (e.g., a safety or security film).

## Claims

1. A method for forming a glass structure for a vehicle (600), the method comprising:
applying localized heat (220) to first location of a substantially planar glass structure; and
bending a first glass structure (400) at the first location, wherein a radius of curvature of the glass at the first location is between 2 mm and 5 cm;
joining at least two glass portions to form a second glass structure (400a-c); and
attaching the second glass structure (400a-c) adjacent to the first glass structure (400), offset by an interlayer (426) between the first and the second glass structures (400a-c);
wherein the at least two glass portions are joined at the first location of the first glass structure (400).

2. The method of claim 1, wherein joining the two glass portions comprises filling a gap between the two glass portions with adhesive0.

3. The method of claim 1, further comprising:
applying heat to at least a second location of the glass structure; and
bending the glass structure at the second location, wherein the movable mold moves from a planar orientation to a curved orientation when applying the localized heat (220).

4. The method of claim 1, wherein the planar glass structure is supported by a mold when applying the localized heat (220).

5. The method of claim 1 or 2, wherein the localized heat (220) is supplied by a laser.

6. The method of claim 5, wherein the laser is scanned over the glass structure.

7. The method of one of the preceding claims, wherein joining the two glass portions comprises applying adhesive (322, 424) on planer surfaces of the two glass portions, and wherein the two portions of glass are in direct contact..

8. The method of one of claims 1 to 6 wherein the two glass portions are joined by an adhesive (322, 424) at the first location of the first glass structure (400).

9. The method of one of the preceding claims, wherein the glass structure is heated in an oven (110, 210) operating at least 600 degrees Celsius, and the localized heat (220) heats the first location to at least 650 degrees Celsius.

10. A glass structure for a vehicle (600), comprising:
a first layer of glass formed of a substantially planar layer of glass, the first layer of glass including at least one curved region having a radius of curvature of 2 mm to 5 cm;
a second layer of glass formed of at least two portions of glass adjacent to the first layer of glass, wherein the two portions of glass are joined at the at least one curved region; and
a polymer disposed between the first layer of glass and the second layer of glass.

11. The structure of claim 10, wherein the at least two portions of glass are joined together by a polymer.

12. The structure of claim 10, wherein the at least two portions of glass are glass welded together.

13. The structure of one of claims 10 to 12, wherein the two portions of glass form an angle of between 5 degrees and 120 degrees.

14. The structure of one of claims 10 to 13, wherein the two portions of glass form a mitered joint.

15. A vehicle (600) comprising:
one or more electric motors (610A, 610B);
a battery pack connected to the electric motors (610A, 610B); and
the glass structure of one of claims 10 to 14 positioned on the vehicle.

## Patentansprüche

1. Verfahren zum Bilden einer Glasstruktur für ein Fahrzeug (600), wobei das Verfahren Folgendes umfasst:
Aufbringen von lokalisierter Wärme (220) an einer ersten Stelle einer im Wesentlichen planaren Glasstruktur; und
Biegen einer ersten Glasstruktur (400) an der ersten Stelle, wobei ein Krümmungsradius des Glases an der ersten Stelle zwischen 2 mm und 5 cm beträgt;
Verbinden von mindestens zwei Glasabschnitten, um eine zweite Glasstruktur (400a-c) zu bilden; und
Befestigen der zweiten Glasstruktur (400a-c) angrenzend an die erste Glasstruktur (400), versetzt durch eine Zwischenschicht (426) zwischen der ersten und der zeiten Glasstruktur (400a-c);
wobei die mindestens zwei Glasabschnitte an der ersten Stelle der ersten Glasstruktur (400) verbunden sind.

2. Verfahren nach Anspruch 1, wobei das Verbinden der beiden Glasabschnitte das Füllen eines Spalts zwischen den beiden Glasabschnitten mit Klebstoff umfasst.

3. Verfahren nach Anspruch 1, das ferner Folgendes umfasst:
Aufbringen von Wärme an mindestens einer zweiten Stelle der Glasstruktur; und
Biegen der Glasstruktur an der zweiten Stelle, wobei sich die bewegliche Form beim Aufbringen der lokalisierten Wärme (220) von einer planaren Ausrichtung in eine gekrümmte Ausrichtung bewegt.

4. Verfahren nach Anspruch 1, wobei die planare Glasstruktur beim Aufbringen der lokalisierten Wärme (220) von einer Form gestützt wird.

5. Verfahren nach Anspruch 1 oder 2, wobei die lokalisierte Wärme (220) von einem Laser zugeführt wird.

6. Verfahren nach Anspruch 5, wobei der Laser über die Glasstruktur gleiten gelassen wird.

7. Verfahren nach einem der vorhergehenden Ansprüche, wobei das Verbinden der beiden Glasabschnitte das Aufbringen von Klebstoff (322, 424) auf planaren Oberflächen der beiden Glasabschnitten umfasst, und wobei die beiden Glasabschnitte in direktem Kontakt stehen.

8. Verfahren nach einem der Ansprüche 1 bis 6, wobei die beiden Glasabschnitte durch einen Klebstoff (322, 424) an der ersten Stelle der ersten Glasstruktur (400) miteinander verbunden werden.

9. Verfahren nach einem der vorhergehenden Ansprüche, wobei die Glasstruktur in einem Ofen (110, 210) erhitzt wird, der bei mindestens 600 Grad Celsius betrieben wird, und die lokalisierte Wärme (220) die erste Stelle auf mindestens 650 Grad Celsius erhitzt.

10. Glasstruktur für ein Fahrzeug (600), die Folgendes aufweist:
eine erste Glasschicht, die aus einer im Wesentlichen planaren Glasschicht ausgebildet ist, wobei die erste Glasschicht mindestens einen gekrümmten Bereich mit einem Krümmungsradius von 2 mm bis 5 cm enthält;
eine zweite Glasschicht, die aus mindestens zwei Glasabschnitten neben der ersten Glasschicht ausgebildet ist, wobei die beiden Glasabschnitte in dem mindestens einen gekrümmten Bereich miteinander verbunden sind; und
ein Polymer, das zwischen der ersten Glasschicht und der zweiten Glasschicht angeordnet ist.

11. Struktur nach Anspruch 10, wobei die mindestens zwei Glasabschnitte durch ein Polymer miteinander verbunden sind.

12. Struktur nach Anspruch 10, wobei die mindestens zwei Glasabschnitte miteinander glasverschweißt sind.

13. Struktur nach einem der Ansprüche 10 bis 12, wobei die beiden Glasabschnitte einen Winkel zwischen 5 Grad und 120 Grad bilden.

14. Struktur nach einem der Ansprüche 10 bis 13, wobei die beiden Glasabschnitte eine Gehrungsverbindung bilden.

15. Fahrzeug (600), das Folgendes aufweist:
einen oder mehrere Elektromotoren (610A, 610B);
ein Batteriepack, das mit den Elektromotoren (610A, 610B) verbunden ist; und
die Glasstruktur nach einem der Ansprüche 10 bis 14, die am Fahrzeug positioniert ist.

## Revendications

1. Un procédé de formation d'une structure en verre pour un véhicule (600), le procédé comprenant :
appliquer une chaleur localisée (220) à une première position d'une structure en verre sensiblement plane ;
et
effectuer un cintrage d'une première structure en verre (400) à la première position, le rayon de courbure du verre à la première position étant compris entre 2 mm et 5 cm ;
procéder à un assemblage d'au moins deux portions de verre pour former une seconde structure en verre (400a-c) ;
et
fixer la seconde structure en verre (400a-c) adjacente à la première structure en verre (400), décalée par un intercalaire (426) entre la première et la seconde structures en verre (400a-c) ;
dans lesquels au moins deux portions de verre sont assemblées à la première position de la première structure en verre (400).

2. Le procédé selon la revendication 1, dans lequel l'assemblage des deux portions de verre comprend le remplissage d'un espace entre les deux portions de verre avec un adhésif.

3. Le procédé selon la revendication 1, comprenant en outre :
appliquer de la chaleur à au moins une seconde position de la structure en verre ;
et effectuer un cintrage de la structure en verre à la seconde position, le moule mobile passant d'une orientation plane à une orientation courbe lors de l'application de la chaleur localisée (220).

4. Le procédé selon la revendication 1, dans lequel la structure en verre plane est supportée par un moule lors de l'application de la chaleur localisée (220).

5. Le procédé selon la revendication 1 ou 2, dans lequel la chaleur localisée (220) est fournie par un laser.

6. Le procédé selon la revendication 5, dans lequel le laser est balayé sur la structure en verre.

7. Le procédé selon l'une quelconque des revendications précédentes, dans lequel l'assemblage des deux portions de verre comprend l'application d'un adhésif (322, 424) sur des surfaces planes des deux portions de verre, et dans lequel les deux portions de verre sont en contact direct.

8. Le procédé selon l'une quelconque des revendications 1 à 6, dans lequel les deux portions de verre sont assemblées par un adhésif (322, 424) à la première position de la première structure en verre (400).

9. Le procédé selon l'une quelconque des revendications précédentes, dans lequel la structure en verre est chauffée dans un four (110, 210) fonctionnant à au moins 600 degrés Celsius, et la chaleur localisée (220) chauffe la première position à au moins 650 degrés Celsius.

10. Une structure en verre pour un véhicule (600), comprenant :
une première couche de verre formée d'une couche de verre sensiblement plane, la première couche de verre comprenant au moins une zone courbe ayant un rayon de courbure de 2 mm à 5 cm ;
une seconde couche de verre formée d'au moins deux portions de verre adjacentes à la première couche de verre, les deux portions de verre étant assemblées au niveau de ladite au moins une zone courbe ;
et un polymère disposé entre la première couche de verre et la seconde couche de verre.

11. La structure selon la revendication 10, dans laquelle lesdites au moins deux portions de verre sont assemblées ensemble par un polymère.

12. La structure selon la revendication 10, dans laquelle lesdites au moins deux portions de verre sont soudées par le verre ensemble.

13. La structure selon l'une quelconque des revendications 10 à 12, dans laquelle les deux portions de verre forment un angle compris entre 5 degrés et 120 degrés.

14. La structure selon l'une quelconque des revendications 10 à 13, dans laquelle les deux portions de verre forment un joint à onglet.

15. Un véhicule (600) comprenant :
un ou plusieurs moteurs électriques (610A, 610B) ;
un bloc-batterie connecté aux moteurs électriques (610A, 610B) ;
et la structure en verre selon l'une quelconque des revendications 10 à 14 positionnée sur le véhicule.
